# NEUE EUROPÄISCHE PATENTSCHRIFT

(11) **EP 1 702 096 B2**
(45) Veröffentlichungstag und Bekanntmachung des Hinweises auf die Entscheidung über den Einspruch: **29.12.2010**
(45) Hinweis auf die Patenterteilung: 02.04.2008
(21) Anmeldenummer: 04805046.2
(22) Anmeldetag: 28.12.2004
(51) Int. Cl.: D06F 37/30

(54) **WÄSCHEBEHANDLUNGSGERÄT MIT EINER STEUERANORDNUNG ZUM BE TREIBEN EINES ELEKTRISCHEN MOTORS**
LAUNDRY TREATMENT DEVICE COMPRISING A CONTROL ARRANGEMENT USED TO OPERATE AN ELECTRIC MOTOR
APPAREIL DE TRAITEMENT DE LINGE COMPRENANT UN DISPOSITIF DE COMMANDE PERMETTANT DE FAIRE MARCHER UN MOTEUR ELECTRIQUE

(30) Priorität: 29.12.2003 DE 10361405
(43) Veröffentlichungstag der Anmeldung: 20.09.2006
(73) Patentinhaber: BSH Bosch und Siemens Hausgeräte GmbH, 81739 München (DE)
(72) Erfinder: ALBAYRAK, Hasan, Gökcer, 13469 Berlin (DE); LUDENIA, Thomas, 14612 Falkensee (DE); SKRIPPEK, Jörg, 14641 Priort (DE)
(86) Internationale Anmeldenummer: PCT/EP2004/053721
(87) Internationale Veröffentlichungsnummer: WO 2005/064066

(56) Entgegenhaltungen:
- EP-A- 0 090 716
- EP-A- 0 478 807
- EP-A- 0 999 629
- DE-U1- 9 214 387
- US-A1- 2003 001 537

## Beschreibung

Die Erfindung betrifft ein Wäschebehandlungsgerät mit einer Steueranordnung zum Betreiben eines elektrischen Motors, der eine Wäschetrommel antreibt und mit den weiteren Merkmalen gemäß Oberbegriff des Anspruchs 1. Die Steueranordnung enthält Mittel zur Messung eines Betriebswertes, wie eines Betriebsstromes, einer elektrischen Leistung und/oder einer elektrischen Arbeit des Motors oder der Steueranordnung, wobei der Betrieb des elektrischen Motors von dem gemessenen Betriebswert abhängt.

Bei bekannten modernen Wäschebehandlungsgeräten, wie Waschmaschinen, soll die Reinigung der zu behandelnden Wäsche in einer immer kürzeren Zeitdauer bei gleichbleibend bis sogar verbesserten Energie- und Wasserverbräuchen erfolgen. Um Wasch- und Reinigungszeit während eines Wäschebehandlungsprogrammes, das beispielsweise aus mehreren Wasch-, Spül- und Schleuderphasen besteht, einzusparen, ist es notwendig die sogenannte Wäschemechanik während der Wasch- und Spülphasen zu erhöhen. Das heißt, die in der Wäschetrommel befindliche Wäsche muss durch einen entsprechenden Programmablauf mit einer erhöhten bzw. häufigeren Trommeldrehung gegenüber der in älteren Wäschebehandlungsmaschinen üblichen Programmabläufen bewegt werden. Alternativ können auch die Stillstandszeiten der Trommel während der Wasch- und Spülphasen so weit wie möglich reduziert werden. Für den Antriebsmotor des Wäschebehandlungsgerätes hat dies zur Folge, dass die Einschaltzeitdauern des Antriebsmotors immer weiter erhöht werden müssen. Zur Verbesserung des Spülergebnisses und zur Reduzierung der Wasserverbräuche weisen bekannte Waschmaschinen Schleuderabläufe auf, bei denen die Wäschetrommel mit Drehzahlen bis zu 1800 1/min oder sogar darüber betrieben wird. Die Füllmengen der Wäschetrommeln werden außerdem immer größer. Somit müssen von den Antriebsmotoren immer höhere Drehmomente bereitgestellt werden.

Daher sind beispielsweise Asynchronmotore, die von Frequenz-Umrichterschaltungen gesteuert werden, in Wäschebehandlungsgeräten mittlerweile üblich, da solche Antriebssysteme ein hohes Drehmoment aufweisen und mit sehr hohen Einschaltzeitdauern betrieben werden können. Solche Frequenz-Umrichterschaltungen haben sehr leistungsfähige Mikrokontroller und eine Einrichtung zur Messung von Betriebswerten, beispielweise der elektrischen Leistung des Antriebsmotors oder der Frequenz-Umrichterschaltung. An Hand solcher Betriebswerte werden die Regel- und Steuerabläufe einer Freqienz-Umrichterschaltung derart beeinflusst, dass eine leistungsoptimierte Ansteuerung des Antriebsmotors erfolgen kann. Nachteilig an solchen Antriebssystemen ist es, dass sie im Vergleich zu ebenfalls üblichen Universalmotoren mit einfacheren Motorsteuerungen deutlich kostenintensiver sind.

Die in Waschgeräten eingesetzten Universalmotore können gegenüber den Asynchronmotoren nur mit einer verminderten Einschaltzeitdauer betrieben werden. Andernfalls würden sich die Antriebsmotore zu stark erwärmen. Antriebsmotore für Wäschebehandlungsgeräte müssen aber grundsätzlich nach der geltenden internationalen Norm für einen sogenannten Grenzbetrieb ausgelegt werden, dabei darf eine sich beim Betrieb des Motors einstellende Betriebstemperatur des Motors eine in der Norm vorgegebene Grenztemperatur nicht überschreiten. Bei einem im Haushalt üblichen Betrieb des Wäschebehandlungsgerätes wird die Grenztemperatur meist nie erreicht. Darüber hinaus haben die Motore zur zusätzlichen Absicherung einen Temperatur-Schalter, der einen Betrieb des Motors unterbindet, wenn die Betriebstemperatur des Motors die Grenztemperatur bzw. einen vorgegebenen Schwellwert des Temperatur-Schalters überschreitet. Dadurch wird eine zwangsweise Stillstandpause des Motors erzeugt, während der der Motor abkühlen kann. Eine so bewirkte Stillstandspause des Motors führt dazu, dass während einer Wasch oder Spülphase nur eine stark verminderte Wäschemechanik bewirkt wird, was letztlich zu einem schlechten Reinigungs- oder Spülergebnis führt.

Bei einer aus EP 0 478 807 A1 bekannten Waschmaschine wird mittels eines Temperatur-Sensors die jeweilige während eines Programmablaufes sich einstellende Betriebstemperatur des Motors gemessen. Die gemessene Betriebstemperatur ist ebenfalls ein Betriebswert des Motors. Abhängig von dem Betriebstemperaturwert bzw. dem Betriebswert des Motors werden Zeitdauern von Ein- und Ausschaltphasen des Motors und die Gesaint-Programn-daufzeit eines Wäschebehandlungsprogrammes durch eine Programmsteuer-Einrichtung der Waschmaschine derart beeinflusst, dass eine Motor-Grenztemperatur nicht überschritten wird. Zusätzlich soll während der Wasch- und Spülphasen eine höchstmögliche Einschaltdauer des Motors erzielt werden, um die gewünschte Wäschemechanik zu bewirken, die ein Wäschebehandlungsprogramm ausreichend kurz halten kann. Nachteilig bei einer solchen Waschmaschine ist, dass für die Beeinflussung der Ein- und Ausschaltphasen zusätzliche Sensoren und ein zusätzlicher Regelkreis in der Programmsteuer-Einrichtung erforderlich sind.
Dokument EP-A-90716 offenbart ein Wäschebehandlungsgerät mit einer Steuerung gemäß dem Oberbegriff des Anspruchs 1.

Ausgehend von diesem Stand der Technik ist die Aufgabe der Erfindung, für ein Wäschebehandlungsgerät der eingangs genannten Art einfache und kostengünstige Mittel bereit zu stellen, mit denen ein Motor des Wäschebehandlungsgerätes mit einer hohen Einschaltdauer (ED) betreibbar ist, ohne dass eine zulässige Grenztemperatur überschritten wird, wobei keine Temperatursensoren zur Messung der Motortemperatur verwendet werden sollen.

Erfindungsgemäß wird die Aufgabe durch die Merkmale des Anspruchs 1 gelöst.

Die Temperatur eines elektrischen Motors ist maßgeblich von einem Betriebsstrom abhängig, also einem Betriebswert des Motors, der sich während des Betriebs in den Wicklungen des Motors zur Ausbildung eines Drehmomentes darstellt. Das erforderliche Drehmoment des Motors zum Antreiben einer Wäschebehandlungstrommel wird durch die Menge und Beschaffenheit der in der Wäschebehandlungstrommel befindlichen Wäsche und einer für eine Wäscheart vorteilhaften Trommeldrehzahl und/oder Wassermenge bestimmt, die durch eine Programmsteuer-Einrichtung des Wäschebehandlungsgerätes oder einer Steueranordnung des Motors vorgegeben werden. Während eines Wäschebehandlungsablaufes ändert sich mit jeder Trommelbewegung die Lage der Wäsche innerhalb der Trommel, und somit variiert das erforderliche Drehmoment des Antriebsmotors während des Betriebs der Trommel mit einer vorgegeben Drehzahl stark.

In zahlreichen Versuchen mit verschiedenen Programmabläufen eines Wäschebehandlungsgerätes konnte festgestellt werden, dass die Betriebstemperatur des Motors mit einem Wert korreliert, der einem Mittelwert und/oder einem Summenwert von gemessenen Betriebsstromwerten bzw. von Betriebswerten einer gewissen Zeitdauer entspricht. Vorteilhafterweise werden daher die Betriebswerte über eine vorbestimmte Zeitdauer gemittelt bzw. summiert, wobei die Zeitdauer so gewählt ist, dass der Verlauf der Mittelwerte der Betriebswerte und/oder Summenwerte der Betriebswerte dem Verlauf einer sich einstellenden Motorerwärmung gut entspricht und durch temporäre Erscheinungen wie kurzzeitig hohe Betriebsströme des Motors nicht verfälscht sind. Zur Bestimmung eines Betriebswertes eignen sich vorteilhafterweise auch die von dem Motor aufgenommene elektrische Leistung und die elektrische Arbeit. Dabei können Betriebsstrom, aufgenommene elektrische Leistung und/oder elektrische Arbeit des Motors direkt mit einer Einrichtung der Steueranordnung des Motors wie einer Strom-, Spannungs- und/oder Leistungsmesseinrichtung oder indirekt über eine Bestimmung eines Betriebsstroms, einer aufgenommenen elektrischen Leistung und/oder einer elektrischen Arbeit der Steueranordnung des Motors bestimmt werden.

Gemäß der Erfindung wird die Bestimmung des Mittelwertes der Betriebswerte und/oder des Summenwertes der Betriebswerte während einzelner Phasen eines Wäschebehandlungsablaufes wiederholt. Die Wiederholung erfolgt sequentiell, das heißt, ein Beginn eines durch die Zeitdauer bestimmten Messintervalls der Betriebswerte erfolgt erst nach einem Ende eines vorangegangenen Messintervalls. In einer alternativen Ausgestaltung erfolgt die Wiederholung gleitend, d. h., der Beginn eines Messintervalls liegt innerhalb eines vorangegangenen Messintervall, wodurch eine gleitende nahezu kontinuierliche Bestimmung des Mittelwertes und/oder des Summenwertes der Betriebswerte während der einzelnen Phasen des Wäschebehandlungsablaufes möglich ist. Durch eine solche Weiterbildung ist es möglich, das gesamte Wäschebehandlungsprogramm hinsichtlich des Betriebswertes zu überwachen, so dass durch die Steueranordnung nicht nur zu einem Zeitpunkt sondern kontinuierlich während eines Wäschebehandlungsablaufes ein Betrieb des Motors bewirkt wird, bei dem die Betriebstemperatur des Motors eine vorbestimmte Grenztemperatur nicht übersteigt.

Ferner beinhaltet die Steueranordnung eine Berechnungseinrichtung zur Bestimmung der Betriebstemperatur des Motors. Die Betriebstemperatur wird mittels eines thermischen Motormodels, einer Näherungs□rechenvorschrift oder einer Zuordnungstabelle aus dem Mittelwert der Betriebswerte und/oder dem Summenwert der Betriebswerte berechnet. Hierdurch kann besonders einfach ein Vergleich mit einer Einrichtung der Steueranordnung zwischen der so berechneten bzw. bestimmten Betriebstemperatur und einem Grenztemperaturwert erfolgen.

Gemäß der Erfindung, wird durch die Steueranordnung des Motors ein Betrieb mit einer Einschaltzeitdauer, einer Ausschaltzeitdauer und/oder einer Drehzahl des Motors derart bewirkt, dass die Betriebstemperatur des Motors eine vorbestimmte Grenztemperatur nicht übersteigt, wobei die Einschaltzeitdauer, die Ausschaltzeitdauer und/oder die Drehzahl abhängig von dem Mittelwert der Betriebswerte und/oder dem Summenwert der Betriebswerte bzw. von der an Hand des Mittelwertes und/oder des Summenwertes bestimmten Betriebstemperatur ist. Durch eine solche Ausgestaltung der Erfindung kann eine zuverlässige Einhaltung einer Grenztemperatur des Motors bewirkt werden, ohne dass ein Sensor zu Bestimmung der Motortemperatur erforderlich ist, wodurch die Steueranordnung des Motors kostengünstig herstellbar ist.

Ferner sind gemäß der Erfindung die Einschaltzeitdauer, die Ausschaltzeitdauer und/oder die Drehzahl des Motors abhängig von einer extrapolierten Betriebs□temperatur des Motors, einem extrapolierten Mittelwert der Betriebswerte und/oder einem extrapolierten Summenwert der Betriebswerte, die mit einer Einrichtung der Steueranordnung an Hand des Verlaufes der Betriebstemperatur des Motors, des Mittelwertes der Betriebswerte und/oder des Summenwertes der Betriebswerte bestimmt werden. Durch eine solche vorausschauende Beeinflussung der Einschaltzeitdauer, der Ausschaltzeitdauer und/oder der Drehzahl des Motors kann eine höchstmögliche Motor- bzw. Trommelbewegung auch bei im Haushalt üblichen Wäschebehandlungsabläufen erzielt werden, ohne dass eine Grenztemperatur des Motors überschritten wird.

Besonders vorteilhaft ist es, wenn in einer weiteren Ausgestaltung der Erfindung, die Steueranordnung Mittel enthält, die eine Umgebungstemperatur des Wäschebehandlungsgerätes und/oder des Motors bestimmt. Hierdurch kann eine wesentlich genauere Bestimmung der Betriebstemperatur des Motors während eines Wäschebehandlungsablaufes erfolgen. Die Mittel der Steueranordnung können so ausgebildet sein, dass die Umgebungstemperatur des Wachsgerätes und/oder des Motors durch eine Einrichtung der Steueranordnung bestimmt werden. In einer alternativen Ausgestaltung beinhalten die Mittel der Steueranordnung geeignete Kommunikationseinrichtungen, die mit einer anderen Steuer- und/oder Messeinrichtung zur Bestimmung der Umgebungstemperatur in Verbindung stehen.

Eine Speichereinrichtung der Steueranordnung des Motors enthält in einer weiteren vorteilhaften Ausgestaltung der Erfindung vorbestimmte Kennwerte eines thermischen Motormodells, einer Näherungsrechenvorschrift und/oder einer Zuordnungstabelle für eine oder mehrere Motorvarianten. Dabei sind die Kennwerte unterschiedlicher Motorvarianten verschieden. Der besondere Vorteil dieser Weiterbildung, liegt darin, dass dadurch eine Steueranordnung für mehrere Motorvarianten einsetzbar ist. Durch eine Reduzierung der Anzahl an Steueranordnungsvarianten können die Herstellkosten der Steueranordnung gesenkt werden.

Die Steueranordnung des Motors bewirkt in einer weiteren vorteilhaften Ausgestaltung der Erfindung einen Betrieb des Motors, bei dem die Einschaltzeitdauer des Motors gegenüber einer vorbestimmten Soll-Einschaltzeitdauer verkürzt, die Ausschaltzeitdauer des Motors gegenüber einer vorbestimmten Soll-AusschaltzeitDdauer verlängert und/oder die Drehzahl des Motors gegenüber einer vorbestimmten Soll-Drehzahl reduziert ist, wenn die bestimmte Betriebstemperatur des Motors, der Mittelwert der Betriebswerte und/oder der Summenwert der Betriebswerte einen zugeordneten Grenzwert überschreitet. Bei einem sokhen Betrieb des Motors mit einer reduzierten Leistung sinkt die Betriebstemperatur, wobei durch die Bewegung weiterhin eine zur Reinigung der Wäsche notwendigen Mechanik erzeugt wird. Dies ist insbesondere vorteilhaft gegenüber einem Motor mit einem Temperatur-Schalter, der in einem solchen Fall die vollständige zeitweilige Abschaltung des Motors bewirken würde.

Die Erfindung ist derart weitergebildet, dass eine Einrichtung der Steueranordnung eine Abschaltung des Motors bewirkt, solange die bestimmte Betriebstemperatur des Motors, der Mittelwert der Betriebswerte und/oder der Summenwert der Betriebswerte einen zugeordneten Sicherheitsgrenzwert überschreitet. Durch diese besonders vorteilhafte Ausgestaltung kann eine Sicherheitsabschaltung des Motors durch die Steueranordnung bewirkt werden, ohne dass der Motor einen Temperatur-Schalter hat.

In einer weiteren vorteilhaften Ausgestaltung der Erfindung bewirkt die Steueranordnung einen Betrieb des Wäschebehandlungsgerätes mit einer gegenüber einer Soll-Dauer verlängerten Dauer einzelner Phasen des Wäschebehandlungsablaufes, wenn die bestimmte Betriebstemperatur des Motors, der Mittelwert der Betriebswerte und/oder der Summenwert der Betriebswerte den zugeordneten Grenzwert oder den zugeordneten Sicherheitsgrenzwert überschreitet. Da im Falle einer Überschreitung des zugeordneten Betriebstemperaturwertes des Motors, des Mittelwertes der Betriebswerte und/oder der Summenwertes der Betriebswerte die Bewegung des Motors und somit die auf die Wäsche wirkende Wäschemechanik reduziert werden, wird durch eine solche Ausgestaltung die reduzierte Wäschemechanik durch eine Verlängerung der Dauer gegenüber der Soll-Dauer einzelner Phasen des Wäschebehandlungsablaufes ausgeglichen. Beispielsweise kann bei einer Waschmaschine somit besonders vorteilhaft eine gleichbleibende Reinigungs- und Spülwirkung erzielt werden.

An Hand eines bevorzugten Ausführungsbeispiel und der schematischen Ablaufdarstellungen eines Abschnitts eines Wäschebehandlungsprogrammes wird die Erfindung näher erläutert. Dabei zeigen

Figur 1 einen zeitlichen Verlauf der Betriebstemperatur eines Antriebsmotors und der Trommel- bzw. Motordrehzahl eines Wäschebehandlungsgerätes,

Figur 2 einen zeitlichen Verlauf der Betriebstemperatur eines Antriebsmotors und der vom Antriebsmotor aufgenommenen elektrischen Leistung eines Wäschebehandlungsgerätes und

Figur 3 einen zeitlichen Verlauf der Betriebstemperatur eines Antriebsmotors und des Summenwertes der vom Antriebsmotor aufgenommenen elektrischen Leistung eines Wäschebehandlungsgerätes, wobei der Summenwert über eine bestimmte Zeitdauer gebildet wird.

Beim bevorzugten Ausführungsbeispiel handelt es sich um eine Waschmaschine, insbesondere um eine Haushaltwaschmaschine. Die Erfindung ist aber nicht auf ein solches Wäschebehandlungsgerät beschränkt, sondern sie kann beispielsweise auch für Wäschetrockner und Waschvolltrockner verwendet werden.

Die nicht dargestellte Waschmaschine hat einen Laugenbehälter, in dem eine drehbar gelagerte Trommel zur Aufnahme der zu behandelnden Wäsche ist. Weiter verfügt die Waschmaschine über Einrichtungen zur Zuführung von Frischwasser und von Waschmittel in den Laugenbehälter und Einrichtungen zur Abführung des Frischwassers bzw. der Lauge aus dem Laugenbehälter. Ferner hat die Waschmaschine einen Universalmotor, insbesondere einen mit Wechselstrom betriebenen Universalmotor, der an dem Laugenbehälter befestigt ist und über ein Riementrieb die Wäschetrommel antreiben kann. Weiter hat die Waschmaschine eine Bedienblende mit Einrichtungen zur Auswahl von Wasch- und Sonderprogrammen. Die Einrichtungen der Bedienblende sind mit einer Programmsteuerelektronik verbunden, die gemäß des ausgewählten Waschprogramms mit einer integrierten Ablaufsteuerung den Programmablauf bewirkt. Die Programmsteuerelektronik ist mit einer Steueranordnung des Motors verbunden. Dabei gibt die Programmsteuerelektronik entsprechend dem gewählten Programmablauf Soll-Drehzahlen der Trommel bzw. des Motors, Soll-Einschaltzeitdauem und Soll-Ausschaltzeitdauern der Trommel bzw. des Motors sowie die Drehrichtung des Motors vor. Die Steueranordnung enthält eine Drehzahlregelung, wobei eine Ist-Drehzahl des Motors mit einem mit dem Universalmotor verbundenen Tacho ermittelt wird. Die Steueranordnung bewirkt gemäß den Soll-Vorgaben eine entsprechende Ansteuerung des Motors, so dass die Trommel eine entsprechende Drehbewegung ausführt. In alternativen Ausgestaltungen können die Bedienelemente, die Programmsteuerelektronik und die Steueranordnung in einer Steuerelektronik integriert werden.

Alternativ kann der Motor von einer anderen Art sein, beispielsweise ein Asynchron-Motor, ein Permanentmagnetmotor oder ein sonst üblicher Waschmaschinen-Antrieb. Ebenso kann ein Rotor des Motors direkt mit der Trommelachse verbunden sein. Da die Art des Waschmaschinenmotors nicht erfindungsrelevant ist, wird der Waschmaschinenantrieb im weiteren nur als Motor bezeichnet.

Die Steueranordnung der erfindungsgemäßen Waschmaschine zum Betreiben des Motors hat eine Einrichtung zur Bestimmung eines bei einer Ansteuerung des Universalmotors sich ausbildenden Stromes, eine Einrichtung zur Messung der Betriebsspannung des Motors und eine Einrichtung zur Bestimmung der vom Motor aufgenommenen Leistung P, in der beispielsweise der gemessene Strom und die Betriebsspannung multipliziert werden. Hierbei stellen Strom, Spannung und Leistung Betriebswerte des Motors dar. In einer alternativen Ausführungsform können auch der von der Steueranordnung aufgenommenen Strom bzw. die elektrische Leistung während der Ansteuerung bestimmt werden. Hierbei sind Strom und Leistung Betriebswerte der Steueranordnung. In weiteren alternativen Ausführungsformen der Steueranordnung kann auch die elektrische Arbeit W als ein Betriebswert des Motors und/oder der Steueranordnung dienen.

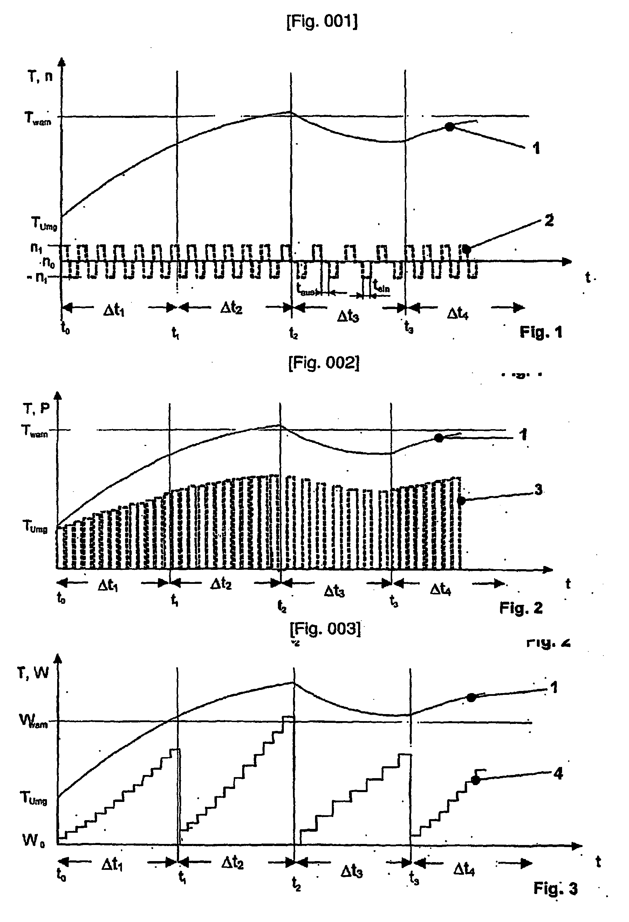

Bei einem Koch-/Buntwäscheprogramm wird durch die Steueranordnung ein Betrieb des Motors bzw. der Trommel bewirkt, bei dem die Trommel mit wechselnden Drehrichtungen mit einer Drehzahl n₁ bzw. -n₁ bewegt wird, dabei ist das Verhältnis der Ein- und Ausschaltzeitdauern des Motors so gewählt, dass der Motor während einer Dauer von 90% eingeschaltet ist (90% ED). Ein zeitlicher Verlauf der Trommeldrehzahl 2 ist in Figur 1 dargestellt, wobei während der ersten Zeitdauern Dt₁ und Dt₂ eines Koch-/Buntwäscheprogrammes die Trommelbewegung mit 90% ED des Motors erfolgt. Während des Betriebs des Motors steigt die Betriebstemperatur des Motors von einer Temperatur an, die der Umgebungstemperatur T_{umg} entspricht. Der Temperaturverlauf 1 ist ebenfalls in Fig. 1 dargestellt. Durch die Erwärmung des Motors steigt der elektrische Widerstand der Wicklungen des Motors an. Dadurch steigen mit steigender Betriebstemperatur auch der sich bei einer Ansteuerung des Motors ausbildende Strom bzw. die vom Motor aufgenommenen Leistung P an.

In Fig. 2 ist der Verlauf der von Motor aufgenommenen und durch die Steueranordnung bestimmten elektrischen Leistung 3 schematisch dargestellt. Diese Darstellung ist stark vereinfacht und stellt die Korrelation der elektrischen Leistung P zur Betriebstemperatur T des Motors dar unter der Voraussetzung, dass bei jeder Ansteuerung gleiche Drehmomente erforderlich sind. Die aufgenommene Leistung P des Motors variiert von Ansteuerung zu Ansteuerung üblicher Weise sehr stark, da je nach Wäschebeladung und Wäschebewegung stark unterschiedliche Drehmomente vom Motor aufgebracht werden müssen.

Erfindungsgemäß wird die elektrische Leistung P innerhalb einer vorbestimmten Zeitdauer Dt durch eine Einrichtung der Steueranordnung aufsummiert, wobei der Summenwert sich am Ende der Zeitdauer Dt ergibt, beispielsweise am Ende der Zeitdauer Dt₁ zum Zeitpunkt t₁. Der Verlauf der summierten elektrischen Leistung 4 ist in Fig. 3 dargestellt. Ein so gebildeter Wert stellt zugleich die elektrische Arbeit W des Motors während der Zeitdauer Dt dar. An eine Bestimmung des Summenwertes einer ersten Zeitdauer Dt₁ schließt eine erneute Bestimmung eines weiteren Summenwertes während der Zeitdauer Dt₂ an, wobei die elektrische Leistung wieder von Null beginnend aufsummiert wird. Der Summenwert der elektrischen Leistung ergibt sich dann wieder am Ende der Zeitdauer Dt₂, also zum Zeitpunkt t₂. Die Bestimmung des Summenwertes der elektrischen Leistung wird in einer solchen Sequenz während des Programmablaufes bzw. während einer Phase wie Wasch-, Spül- oder Schleuderphase des Programmablaufes wiederholt. In einer alternativen Ausführungsform können die Zeitdauern Dt auch zeitlich versetzt beginnen, so dass der Summenwert quasi kontinuierlich bzw. gleitend bestimmt wird.

In einer weiteren Ausführungsform wird innerhalb einer Zeitdauer Dt der Mittelwert der elektrischen Leistung bzw. von Betriebswerten, die innerhalb der Zeitdauer Dt bestimmt wurden, durch eine Einrichtung der Steueranordnung bestimmt. Beispielsweise wird der Summenwert der Betriebswerte durch die Anzahl der Betriebswerte, die innerhalb der Zeitdauer Dt bestimmt wurden, geteilt.

Die Steueranordnung enthält weiter eine Berechnungseinrichtung wie einen Mi_□krokontroller, die jeweils am Ende einer Zeitdauer Dt, beispielsweise zum Zeitpunkt t₁, aus dem Summenwert der elektrischen Leistung bzw. der Betriebswerte die Betriebstemperatur T des Motors berechnet. In einer alternativen Ausführung erfolgt die Bestimmung der Betriebstemperatur T an Hand eines Mittelwertes der Betriebswerte. Die Einrichtung enthält Rechenregeln zur Bestimmung eines thermischen Motormodels, dessen Kennwerte in einer Einrichtung der Steueranordnung gespeichert sind. Eine Auswertung einer Zuordnungstabelle oder die Lösung von Näherungsgleichungen durch die Einrichtung der Steueranordnung sind alternative Ausführungsformen zur Bestimmung der Betriebstemperatur T des Motors.

Eine Waschmaschine hat einen Temperatursensor, der zur Messung der in dem Laugenbehälter befindlichen Lauge dient. Bei einer erfindungsgemäßen Waschmaschine wird vor einem ersten Wasserzulauf eines Waschprogramms mit einem solchen Sensor die Lufttemperatur im Laugenbehälter gemessen. Die Temperatur entspricht etwa der Umgebungstemperatur T_{umg} des Motors, der am Laugenbehälter befestigt ist. Die gemessene Temperatur dient als Ausgangstemperatur bzw. Betriebstemperatur, die der Motor zum Zeitpunkt t₀ aufweist. Weitere übliche Sensoreinrichtungen einer Waschmaschine, die eine Ermittlung der Umgebungstemperatur T_{umg} ermöglichen, sind ebenfalls verwendbar.

Die Steueranordnung des Motors verfügt über eine Speichereinrichtung, in der die Kennwerte des thermischen Motormodells mehrerer Motorvarianten gespeichert sind. Über eine geeignete Codierung der Steueranordnung sind die Kennwerte einer Motorvariante auswählbar.

Die Steueranordnung enthält weiter eine Vergleichseinrichtung, die den Summenwert der elektrischen Leistung bzw. der Betriebswerte mit einen dem Summenwert der elektrischen Leistung zugeordneten Grenzwert W_{warn} vergleicht. Bei dem in Fig. 3 dargestellten Verlauf der Summenwerte der elektrischen Leistung wird der Grenzwert W_{warn} zum Zeitpunkt t₂ überschritten. Daraufhin werden die Einschaltzeitdauern und Ausschaltzeitdauern des Motors durch die Steueranordnung derart bestimmt, dass der Motor mit einer ED von 70% während der daran anschließenden Zeitdauer Dt₃ betrieben wird. Am Ende der Zeitdauer Dt₃ zum Zeitpunkt t₃ ist der Summenwert der elektrischen Leistung wieder unterhalb des Grenzwertes W_{warn}. Somit bewirkt die Steueranordnung einen Betrieb des Motors wieder mit der ursprünglichen ED von 90%. In alternativen Ausführungsformen erfolgt der Vergleich der ermittelten Betriebstemperatur T des Motors mit einem der Betriebstemperatur zugeordneten Grenzwert T_{warn} bzw. ein Vergleich eines Mittelwertes der Betriebswerte mit einem dem Mittelwert zugeordneten Grenzwert. In weiteren Ausführungsformen ist auch ein Vergleich mit mehreren Grenzwerten denkbar. Beispielsweise kann bei einer Überschreitung der Betriebstemperatur des Motors von 100°K eine ED von 80%, bei einer Überschreitung von 105°K eine ED von 75% durch die Steueranordnung bewirkt werden.

Entsprechend erfolgt in einer bevorzugten Ausführungsform der Vergleich des Summenwertes der elektrischen Leistung bzw. der Betriebswerte mit einem dem Summenwert zugeordnetem Sicherheitsgrenzwert durch eine Einrichtung der Steueranordnung, wobei im Falle eines Überschreitens des Sicherheitsgrenzwertes die Steueranordnung eine Abschaltung des Motors bewirkt. Auch während der Abschaltzeitdauer wird die Bestimmung des Summenwertes der elektrischen Leistung weitergeführt. Somit kann im weiteren wieder eine Unterschreitung des Sicherheitsgrenzwertes festgestellt werden, und im weiteren Programmablauf kann der Motor wieder wie vor der Temperaturerhöhung betrieben werden.

Bei einem weiteren bevorzugten Ausführungsbeispiel werden die Summenwerte der elektrischen Leistung bzw. der Betriebswerte während eines Programmablaufes gleitend ermittelt. Aus dem Verlauf der so bestimmten Summenwerte wird mit einer Einrichtung der Steueranordnung ein sich voraussichtlich einstellender Summenwert extrapoliert. An Hand dieses extrapolierten Summenwertes wird durch eine Einrichtung der Steueranordnung eine maximal mögliche ED des Motors berechnet, ohne dass eine vorgegebene Grenztemperatur im weiteren Programmablauf überschritten wird. Die Steueranordnung bewirkt auch einen Betrieb des Motors mit der so bestimmten ED des Motors, wobei die ED laufend an den aktuellen Verlauf des Summenwertes der elektrischen Leistung angepasst wird.

In einer bevorzugten Ausführungsform wird ein Betrieb des Waschgerätes durch die Steueranordnung mit einer Dauer bewirkt, die gegenüber einer durch die Programmsteuerelektronik vorgegeben Soll-Dauer einer Phase des Waschablaufes verlängert ist. Eine solche Verlängerung der Phase wird dann bewirkt, wenn der Summenwert der elektrischen Leistung den zugeordneten Grenzwert überschreitet.

Die vorstehenden Ausführungen werden in Wasch- und Spülphasen angewendet, bei denen eine Variation der Trommel- bzw. Motordrehzahl nicht gewünscht ist. In den sogenannten Schleuderphasen eines Waschprogrammes wird die Drehzahl gegenüber einer Soll-Drehzahl variiert. Wenn der Summenwert der elektrischen Leistung einen zugeordneten Grenzwert überschreitet, wird die Drehzahl gegenüber der Soll-Drehzahl vermindert. Nur im Falle einer Überschreitung des Sicherheitsgrenzwertes wird auch in einer Schleuderphase der Motor durch die Steuereinrichtung abgeschaltet.

Die besondere Ausführungsform wurde an Hand des Summenwertes der Betriebswerte beschrieben, alternativ können auch die Mittelwerte der Betriebswerte oder die bestimmte bzw. berechnete Betriebstemperatur T statt des Summenwertes gewählt werden.

Bei einer geeigneten Wahl der zugeordneten Grenzwerte und dem zugeordneten Sicherheitsgrenzwert bewirken die bevorzugten Ausführungsformen der Erfindung, dass die Betriebstemperatur T des Motors eine durch die Norm geforderte Grenztemperatur nicht überschritten wird.

## Patentansprüche

1. Wäschebehandlungsgerät mit einer Steueranordnung zum Betreiben eines elektrischen Motors, der eine in dem Wäschebehandlungsgerät drehbar gelagerte Trommel antreibt, wobei die Steueranordnung
- Mittel zur Messung eines Betriebswertes, beispielsweise eines Betriebsstromes, einer elektrischen Leistung und/oder einer elektrischen Arbeit des Motors oder der Steueranordnung, wobei der Betrieb des elektrischen Motors von dem gemessenen Betriebswert abhängt,
- eine Einrichtung zum Bestimmen eines Mittelwertes von Betriebswerten und/oder eines Summenwertes von Betriebswerte und
- Mittel zur Wiederholung der Bestimmung des Mittelwertes der Betriebswerte und/oder des Summenwertes der Betriebswerte während des Programmablaufes, wobei die Wiederholung gleitenden oder sequentiell erfolgt,
enthält, **dadurch gekennzeichnet, dass**
- die Betriebswerte über eine vorbestimmte Zeitdauer (Dt) während eines Programmablaufes des Wäschebehandlungsgerätes gemessen werden,
- die Steueranordnung eine Berechnungseinrichtung zur Bestimmung der Betriebstemperatur des Motors beinhaltet, wobei sich die Betriebstemperatur des Motors mittels eines thermischen Motormodells, einer Näherungsrechenvorschrift oder einer Zuordnungstabelle aus dem Mittelwert der Betriebswerte und/oder dem Summenwert der Betriebswerte ergibt.
- durch die Steueranordnung des Motors ein Betrieb mit einer Einschaltzeitdauer (tₑᵢₙ), einer Ausschaltzeitdauer (tₐᵤₛ) und/oder einer Drehzahl (n) des Motors bewirkt wird, so dass die Betriebstemperatur des Motors eine vorbestimmte Grenztemperatur (T_{wam}) nicht übersteigt, wobei die Einschaltzeitdauer (tₑᵢₙ), die Ausschaltzeitdauer (tₐᵤₛ) und/oder die Drehzahl (n) abhängig von der bestimmten Betriebstemperatur, dem Mittelwert der Betriebswerte und/oder dem Summenwert der Betriebswerte sind und
- die Einschaltzeitdauer (tₑᵢₙ), die Ausschaltzeitdauer (tₐᵤₛ) und/oder die Drehzahl (n) abhängig von einer extrapolierten Betriebstemperatur des Motors, einem extrapolierten Mittelwert der Betriebswerte und/oder einem extrapolierten Summenwert der Betriebswerte sind, die mit einer Einrichtung der Steueranordnung an Hand des Verlaufes der Betriebstemperatur des Motors, des Mittelwertes der Betriebswerte und/oder des Summenwertes der Betriebswerte bestimmt werden.

2. Wäschebehandlungsgerät nach Anspruch 1, **dadurch gekennzeichnet, dass** die Steueranordnung Mittel enthält, die eine Umgebungstemperatur (T_{umg}) des Wäschebehandlungsgerätes und/oder des Motors bestimmt, und dass die Betriebstemperatur des Motors in Abhängigkeit der Umgebungstemperatur (T_{umg}) bestimmt wird.

3. Wäschebehandlungsgerät nach Anspruch 1 oder 2, **dadurch gekennzeichnet, dass** die Steueranordnung eine Speicheieinrichtung mit vorbestimmten Kenngrößen des thermischen Motormodells, der Näherungsrechenvorschrft oder der Zuordnungstabelle für eine oder mehrere Motorverianten enthält

4. Wäschebehandlungsgerät nach einem der Ansprüche 1 bis 3, **dadurch gekennzeichnet, dass** die Steueranordnung einen Betrieb des Motors bewirkt, bei dem die Einschaltzeitdauer (tₑᵢₙ) des Motors gegenüber einer vorbestimmten Soll-Einschaltzeitdauer verkürzt, die Ausschaltzeitdauer (tₐᵤₛ) des Motors gegenüber einer vorbestimmten Soll-Ausschaltzeitdauer verlängert und/oder die Drehzahl (n) des Motors gegenüber einer vorbestimmten Soll-Drehzahl reduziert ist, wenn die bestimmte Betriebstemperatur des Motors, der Mittelwert der Betriebswerte und/oder der Summenwert der Betriebswerte einen zugeordnetem Grenzwert überschreiten.

5. Wäschebehandlungsgerät nach einem der Ansprüche 1 bis 3, **dadurch gekennzeichnet, dass** eine Einrichtung der Steueranordnung eine Abschaltung des Motors bewirkt, solange die bestimmte Betriebstemperatur des Motors, der Mittelwert der Betrisbswerte und/oder der Summenwert der Betriebswerte einen zugeordneten Slcherheitsgrenzwert überschreitet.

6. Wäschebehandlungsgerät nach einem der Ansprüche 1 bis 5, **dadurch gekennzeichnet, dass** die Steueranordnung einen Betrieb des Wäschebehandlungsgerätes mit einer gegenüber einer Soll-Dauer verlängerten Dauer einzelner Phasen des Wäschebehandlungsablaufes bewirkt, wenn die bestimmte Betriebstemperatur des Motors, der Mittelwert der Betriebswerte und/oder der Summenwert der Betriebswerte einen zugeordneten Grenzwert oder den zugeordneten Slcherheitsgrenzwert über schreiten.

## Claims

1. Laundry treatment appliance with a control arrangement for operating an electric motor, which drives a drum rotatably mounted in the laundry treatment appliance, wherein the control arrangement includes
- means for measuring an operating value, for example an operating current, an electrical power and/or an electrical work of the motor or of the control arrangement, wherein the operation of the electric motor depends on the measured operating value,
- a device for determining a mean value of operating values and/or a sum value of operating values and
- means for repeating the determination of the mean value of the operating values and/or of the sum value of the operating values during the program sequence, wherein the repetition is carried out in sliding or sequential manner,
**characterised in that**
- the operating values are measured over a predetermined time period (Dt) during a program sequence of the laundry treatment appliance,
- the control arrangement includes a calculating device for determining the operating temperature of the motor, wherein the operating temperature of the motor results from the mean value of the operating values and/or the sum value of the operating values by means of a thermal motor model, an approximation computing rule or an cross-reference table,
- an operation with a switch-on time period (tₑᵢₙ), a switch-off time period (tₐᵤₛ) and/or a rotational speed (n) of the motor is produced by the control arrangement of the motor so that the operating temperature of the motor does not exceed a predetermined limit temperature (R_{warn}), wherein the switch-on time period (tₑᵢₙ), the switch-off time period (tₐᵤₛ) and/or the rotational speed (n) is or are dependent on the determined operating temperature, the mean value of the operating values and/or the sum value of the operating values, and
- the switch-on time period (tₑᵢₙ), the switch-off time period (tₐᵤₛ) and/or the rotational speed (n) is or are dependent on an extrapolated operating temperature of the motor, an extrapolated mean value of the operating values and/or an extrapolated sum value of the operating values, which is or are determined by a device of the control arrangement on the basis of the course of the operating temperature of the motor, the mean value of the operating values and/or the sum value of the operating values.

2. Laundry treatment appliance according to claim 1, **characterised in that** the control arrangement comprises means which determines an ambient temperature (T_{umg}) of the laundry treatment appliance and/or of the motor and that the operating temperature of the motor is determined in dependence on the ambient temperature (T_{umg}).

3. Laundry treatment appliance according to claim 1 or 2, **characterised in that** the control arrangement comprises a memory device with predetermined characteristic magnitudes of the thermal motor model, the approximation computing rule or the cross-reference table for one or more motor variants.

4. Laundry treatment appliance according to any one of claims 1 to 3, **characterised in that** the control arrangement produces an operation of the motor in which the switch-on time duration (tₑᵢₙ) of the motor is shortened relative to a predetermined target switch-on time period, the switch-off time period (tₐᵤₛ) of the motor is prolonged relative to a predetermined target switch-off time duration and/or the rotational speed (n) of the motor is reduced relative to a predetermined target rotational speed if the determined operating temperature of the motor, the mean value of the operating values and/or the sum value of the operating values exceeds or exceed an associated limit value.

5. Laundry treatment appliance according to any one of claims 1 to 3, **characterised in that** a device of the control arrangement causes switching-off of the motor as long as the determined operating temperature of the motor, the mean value of the operating values and/or the sum value of the operating values exceeds or exceed an associated safety limit value.

6. Laundry treatment appliance according to one of claims 1 to 5, **characterised in that** the control arrangement causes operation of the laundry treatment appliance with a duration, which is extended relative to a target duration, of individual phases of the laundry treatment course if the determined operating temperature of the motor, the mean value of the operating values and/or the sum value of the operating values exceeds or exceed an associated limit value or the associated safety limit value.

## Revendications

1. Appareil de traitement de linge comprenant un dispositif de commande pour faire fonctionner un moteur électrique, qui entraîne un tambour logé de façon rotative dans l'appareil de traitement de linge, le dispositif de commande comprenant :
- des moyens pour mesurer une valeur de service, par exemple un courant de service, une puissance électrique et/ou un travail électrique du moteur ou du dispositif de commande, le fonctionnement du moteur électrique dépendant de la valeur de service mesurée,
- un système pour déterminer une valeur moyenne de valeurs de service et/ou une valeur cumulée de valeurs de service et
- des moyens pour répéter la détermination de la valeur moyenne des valeurs de service et/ou de la valeur cumulée des valeurs de service pendant le déroulement du programme, la répétition s'effectuant de façon glissante ou séquentielle,
**caractérisé en ce que**
- les valeurs de service sont mesurées pendant une durée (Dt) prédéterminée pendant un déroulement de programme de l'appareil de traitement de linge,
- le dispositif de commande contient un système de calcul pour déterminer la température de service du moteur, la température de service du moteur étant obtenue au moyen d'un modèle de moteur thermique, d'une spécification de calcul d'approximation ou d'un tableau d'attribution à partir de la valeur moyenne des valeurs de service et/ou de la valeur cumulée des valeurs de service,
- un fonctionnement avec une durée d'enclenchement (tₑᵢₙ), une durée d'arrêt (tₐᵤₛ) et/ou un régime (n) du moteur étant effectué par le dispositif de commande du moteur, de sorte que la température de service du moteur ne dépasse pas une température limite (T_{warn}) prédéfinie, la durée d'enclenchement (tₑᵢₙ), la durée d'arrêt (tₐᵤₛ) et/ou le régime (n) étant dépendants de la durée de service définie, de la valeur moyenne des valeurs de service et/ou de la valeur cumulée des valeurs de service et
- la durée d'enclenchement (tₑᵢₙ), la durée d'arrêt (tₐᵤₛ) et/ou le régime (n) sont dépendants d'une température de service extrapolée du moteur, d'une valeur moyenne extrapolée des valeurs de service et/ou d'une valeur cumulée extrapolée des valeurs de service, qui sont déterminées avec un système du dispositif de commande à l'aide de la courbe de la température de service du moteur, de la valeur moyenne des valeurs de service et/ou de la valeur cumulée des valeurs de service.

2. Appareil de traitement de linge selon la revendication 1, **caractérisé en ce que** le dispositif de commande contient des moyens qui déterminent une température ambiante (T_{umg}) de l'appareil de traitement de linge et/ou du moteur, et **en ce que** la température de service du moteur est déterminée en fonction de la température ambiante (T_{umg}).

3. Appareil de traitement de linge selon la revendication 1 ou 2, **caractérisé en ce que** le dispositif de commande contient un dispositif de stockage avec des grandeurs caractéristiques prédéfinies du modèle de moteur thermique, de la spécification de calcul d'approximation ou du tableau d'attribution pour une ou plusieurs variantes de moteur.

4. Appareil de traitement de linge selon l'une quelconque des revendications 1 à 3, **caractérisé en ce que** le dispositif de commande du moteur entraîne un fonctionnement du moteur, pendant lequel la durée d'enclenchement (tₑᵢₙ) du moteur est raccourcie par rapport à une durée d'enclenchement de consigne prédéfinie, la durée d'arrêt (tₐᵤₛ) du moteur est allongée par rapport à une durée d'arrêt de consigne prédéfinie et/ou le régime (n) du moteur est réduit par rapport à un régime de consigne prédéfini lorsque la température de service définie du moteur, la valeur moyenne des valeurs de service et/ou la valeur cumulée des valeurs de service dépassent une valeur limite attribuée.

5. Appareil de traitement de linge selon l'une quelconque des revendications 1 à 3, **caractérisé en ce qu'**un système du dispositif de commande entraîne une déconnexion du moteur aussi longtemps que la température de service définie du moteur, la valeur moyenne des valeurs de service et/ou la valeur cumulée des valeurs de service dépassent une valeur limite de sécurité attribuée.

6. Appareil de traitement de linge selon l'une quelconque des revendications 1 à 5, **caractérisé en ce que** le dispositif de commande entraîne un fonctionnement de l'appareil de traitement de linge avec une durée de phase individuelle de l'opération de traitement de linge qui est allongée par rapport à une durée de consigne, lorsque la température de service définie du moteur, la valeur moyenne des valeurs de service et/ou la valeur cumulée des valeurs de service dépassent une valeur limite attribuée ou la valeur limite de sécurité attribuée.
